# EUROPEAN PATENT SPECIFICATION

(11) **EP 2 357 107 B1**
(45) Date of publication and mention of the grant of the patent: **12.09.2012**
(21) Application number: 11152066.4
(22) Date of filing: 25.01.2011
(51) Int. Cl.: B60K 17/10, B62D 11/04

(54) **Transaxle for zero-turn vehicle**
Getriebe für Nullwendekreisfahrzeuge
Boîte-pont pour véhicule à rayon de braquage nul

(30) Priority: 04.02.2010 JP 2010023419
(43) Date of publication of application: 17.08.2011
(73) Proprietor: KANZAKI KOKYUKOKI MFG. CO., LTD., Amagasaki-shi, Hyogo (JP)
(72) Inventor: Hirose, Shinichi, Amagasaki-shi Hyogo 2-18-1 (JP)
(74) Representative: Jostarndt, Hans-Dieter

(56) References cited:
- EP-A2- 1 255 062
- US-B1- 6 775 976

## Description

### Technical Field

The present invention relates to a transaxle configured so as to be paired to serve as right and left transaxles supporting respective right and left axles of a zero-turn vehicle such as a riding lawn mower.

### Background Art

US 6,775,976 B discloses a pair of right and left transaxles according to the preamble of claim 1 to be equipped on a zero-turn vehicle, such as a riding lawn mower, so as to individually drive respective right and left drive wheels. Outputs of the respective right and left transaxles are differentially controlled so as to enable zero-turn of the vehicle, i.e., so that the vehicle can turn centered on a lateral middle point thereof by driving right and left drive wheels at equal speeds in opposite directions. The right and left transaxles include respective right and left transaxle housings mounted on a vehicle body frame of the vehicle. Each of the right and left transaxle housings supports each of right and left axles (or output shafts connected to axles), incorporates hydraulic pump and motor for driving the corresponding axle, and incorporates a reduction gear train interposed between the hydraulic motor and the axle (or output shaft). Each of the right and left transaxles is dividable into two housing parts.

The right and left transaxle housings are laterally symmetric in shape, however, they are not standardized to have a common shape because they need to have respective brake arms at the same height. In other words, each of the right and left transaxle housings cannot serve as the other right or left transaxle housing even if it is reversed vertically and laterally so as to exchange its top and bottom ends for each other and so as to its right and left ends for each other. As a result, two modules or molds must be prepared for making the right and left transaxle housings, thereby increasing costs.

EP 2088023 A discloses a riding lawn mower equipped with front and rear transaxles each of which supports right and left axles (or right and left output shafts connected to respective right and left axles). The front and rear transaxles are identical in structure and form to each other so that a common transaxle housing can serve as a transaxle housing of either of the front and rear transaxles. A motor, e.g., a hydraulic motor or an electric motor, for driving the axle or output shaft, is cantilevered laterally from one of right and left side surfaces of the transaxle housing of each of the front and rear transaxles. However, this reference does not teach how to standardize transaxle housings of respective right and left transaxles individually supporting respective right and left axles of a zero-turn vehicle, i.e., how to enable a transaxle housing to serve as both a transaxle housing of a right transaxle supporting a right axle (or output shaft) and a transaxle housing of a left transaxle supporting a left axle (or output shaft).

In this regard, in this lawn mower, the transaxle housing of each of the front and rear transaxles is dividable at a vertical plane at a lateral middle portion thereof into right and left housing halves which are substantially laterally symmetric with respect to the vertical plane at which they are joined to each other. A common housing half can serve as either the right or left housing half depending on whether or not it is vertically and laterally reversed. In other words, the right housing half corresponds to the left housing half when being vertically and laterally reversed. The common housing half has upper and lower half portions that are substantially symmetric with respect to axes of the axles (or the output shafts), however, it is formed with a boss for supporting a vertical brake camshaft, and the boss is opened at only one of top and bottom ends of the housing half. A brake arm is provided on a head of the brake camshaft projecting outward from the opening of the boss (hereinafter, the boss opening). In the transaxle housing, one of the right and left housing halves has the boss opening at its top end, and the other of the right and left housing halves has the boss opening at its bottom end. One of the boss openings of the respective right and left housing halves is selectively used to support the brake camshaft.

A required height of the brake arm to be provided on the brake camshaft is a significant factor for selecting either the top boss opening of one housing half or the bottom boss opening of the other housing half to support the brake camshaft. Further, a required lateral distance of the brake camshaft from the cantilevered motor, i.e., whether the right housing half or the left housing half has the cantilevered motor mounted thereon is another significant factor for selecting either the boss opening of the right housing half or the boss opening of the left housing half to support the brake camshaft.

The foresaid standardization of right and left transaxles for a zero-turn vehicle means enabling one of the right and left transaxles to be vertically and laterally reversed to serve as the other of the right and left transaxles. However, each of the right and left transaxles for a zero-turn vehicle also has to satisfy requirement in location of the motor, that is, to select whether the motor should be cantilevered rightward or leftward from the transaxle housing, i.e., whether the motor should be mounted on the right housing half or the left housing half. Even if the top boss openings of the respective right and left transaxles should be selected to correspond to the required height of the brake arms, one of the right and left transaxles may happen to have the top boss opening at a wrong distance from its motor. This problem inhibits the transaxle housing supporting right and left axles as shown EP 2088023 A from being adapted as a common transaxle housing that can serve as both the right and left transaxles supporting respective right and left axles for a zero-turn vehicle.

### Summary of the Invention

An object of the present invention is to provide a transaxle that can serve as either of right and left transaxles supporting respective right and left axles (or output shafts to be drivingly connected to respective right and left drive wheels) of a vehicle, especially, a zero-turn vehicle, such as a lawn mower, thereby promoting standardization of the right and left transaxles.

To achieve the object, a transaxle according to the invention as defined by the features of claim 1 includes an output shaft to be drivingly connected to one of right and left drive wheels of a vehicle, a transaxle housing supporting the output shaft laterally, a drive train disposed in the transaxle housing so as to drive the output shaft, and a motor externally mounted onto the transaxle housing. A motor shaft of the motor is disposed at one end thereof in the transaxle housing so as to be drivingly connected to the output shaft via the drive train. A pair of first and second housing halves are joined to each other so as to constitute the transaxle housing. Each of the first and second housing halves is formed from an original housing half formed by a mold, so that the original housing half can be further formed into either the first or second housing half regardless of whether or not the original housing half is vertically and laterally reversed. One of the first and second housing halves has the output shaft projecting outward therefrom. One of the first and second housing halves has the motor mounted thereon. The transaxle can serve as either a right transaxle supporting a right output shaft to be drivingly connected to the right drive wheel of the vehicle or a left transaxle supporting a left output shaft to be drivingly connected to the left drive wheel of the vehicle depending on whether the transaxle is vertically and laterally reversed or not. Preferably, the first and second housing halves are joined to each other at a plane that is perpendicular to the output shaft so as to constitute the transaxle housing. Alternatively, preferably, the first and second housing halves are joined to each other at a plane, on which an axis of the output shaft extends, so as to constitute the transaxle housing.

Therefore, due to the transaxle, right and left transaxles supporting respective right and left output shafts (or axles) for a zero-turn vehicle can be standardized so as to reduce the number of molds for producing transaxle housings of the right and left transaxles, thereby reducing costs.

Preferably, the motor is a hydraulic motor provided with a housing. Thereby, the hydraulic motor is configured to be fluidly connected to a hydraulic pump provided on the vehicle via a pipe. The housing of the hydraulic motor is a prototypic housing that can be further formed to a housing of the hydraulic pump.

Therefore, due to the prototypical housing of the hydraulic motor, the hydraulic pump and the hydraulic motor can be standardized so as to reduce the number of molds for producing housings of the hydraulic pump and motor, thereby reducing costs.

Preferably, the original housing half that can be further formed into either the first or second housing half is formed with vertically symmetric top and bottom bosses for passing a brake camshaft therethrough.

Therefore, a brake arm can be provided on either top or bottom end of the brake camshaft passed through the top and bottom bosses of the first or second housing half of the transaxle housing formed from the original housing half so as to correspond to a required position or height of the brake arm. For example, if the brake arm should be provided on the top end of the brake camshaft, the original housing half can provide the top boss from which the top end of the brake camshaft projects outward regardless of whether or not the original housing half is vertically and laterally reversed to serve as one of the first and second housing halves. Further, for example, if the second housing half should support the brake camshaft, the transaxle can have the brake camshaft supported by the second housing half of its transaxle housing regardless of whether or not the transaxle is vertically and laterally reversed to serve as one of the right and left transaxles for the zero-turn vehicle.

### Brief Description of the Drawings

Fig. 1 is a schematic plan view of a riding lawn mower 100 as an example of a zero-turn vehicle equipped with right and left transaxles 10R and 10L when transaxles 10R and 10L are provided with respective fixed displacement hydraulic motors 20.

Fig. 2 is a sectional plan view of housing halves 13 to be joined to constitute a transaxle housing 12 of a transaxle 10 serving as either of right and left transaxles 10R and 10L when they are disposed laterally symmetrically and are separated from each other.

Fig. 3 is a sectional plan view of left transaxle 10L as representative of transaxle 10 provided with fixed displacement hydraulic motor 20.

Fig. 4 is a sectional plan view of fixed displacement hydraulic motor 20.

Fig. 5 is a sectional plan view of a variable displacement hydraulic pump 30 that can be provided as modification of fixed displacement hydraulic motor 20.

Fig. 6 is a sectional plan view of right transaxle 10R as representative of transaxle 10 provided with a variable displacement hydraulic motor 120 that can be provided as modification of fixed displacement hydraulic motor 20.

Fig. 7 is a cross sectional view of right transaxle 10R taken along VII-VII line of Fig. 6.

Fig. 8 is a fragmentary plan view of representative right transaxle 10R showing a portion thereof with an oil level gauge 130.

Fig. 9 is a sectional view of oil level gauge 130.

Fig. 10 is a plan view of left transaxle 10L as representative of transaxle 10 with a sectional plan view of a hydrostatic transmission 60 including hydraulic pump 61 and motor 62 to be attached to transaxle 10.

Fig. 11 is a schematic plan view of lawn mower 100 equipped with right and left transaxles 10R and 10L when transaxles 10R and 10L are provided with respective electric motors 70.

### Detailed Description of the Invention

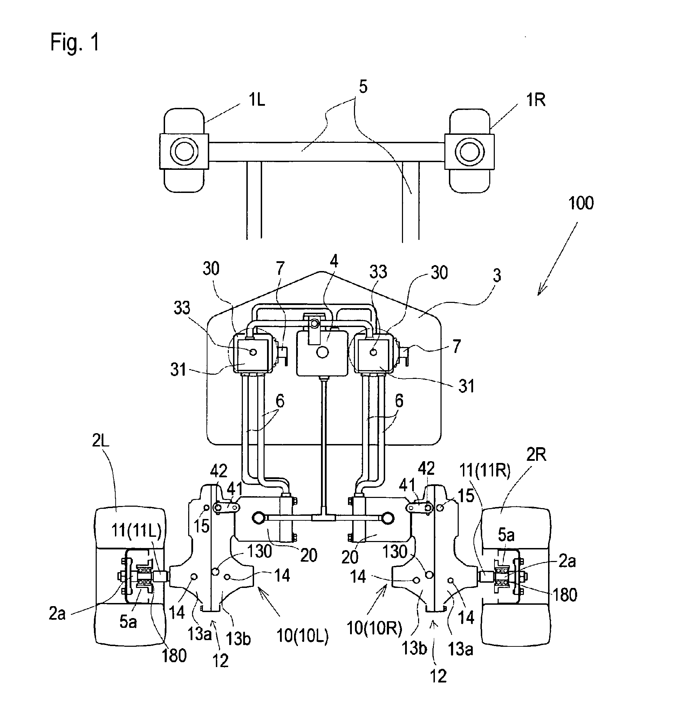

Referring to Fig.1, an entire structure of a lawn mower 100 equipped with right and left transaxles 10R and 10L will be described. Lawn mower 100 has a vehicle body frame 5 from which a mower deck 3 incorporating blades is suspended. Right and left casters 1R and 1L serving as front wheels are provided on right and left front ends of vehicle body frame 5. Right and left drive wheels 2R and 2L serve as right and left rear wheels and have respective axles 2a serving as their respective center axes. Axles 2a are journalled by right and left axle supporting portions 5a of vehicle body frame 5 via respective bearings 180.

Right and left transaxles 10R and 10L are supported by vehicle body frame 5 of lawn mower 100. A single output shaft 11 R projects rightwardly outward from a transaxle housing 12 of right transaxle 10R and is coaxially joined to axle 2a of right drive wheel 2R via a coupling member, such as a splined sleeve, so as to be rotatable integrally with right drive wheel 2R. A single output shaft 11L projects leftwardly outward from a transaxle housing 12 of left transaxle 10L and is coaxially joined to axle 2a of left drive wheel 2L via a coupling member, such as a splined sleeve, so as to be rotatable integrally with left drive wheel 2L. In other words, right transaxle 10R and left transaxle 10L are disposed laterally symmetrically with respect to a longitudinal centerline of lawn mower 100 at a lateral middle position between axles 2a of right and left drive wheels 2R and 2L extended coaxially to each other.

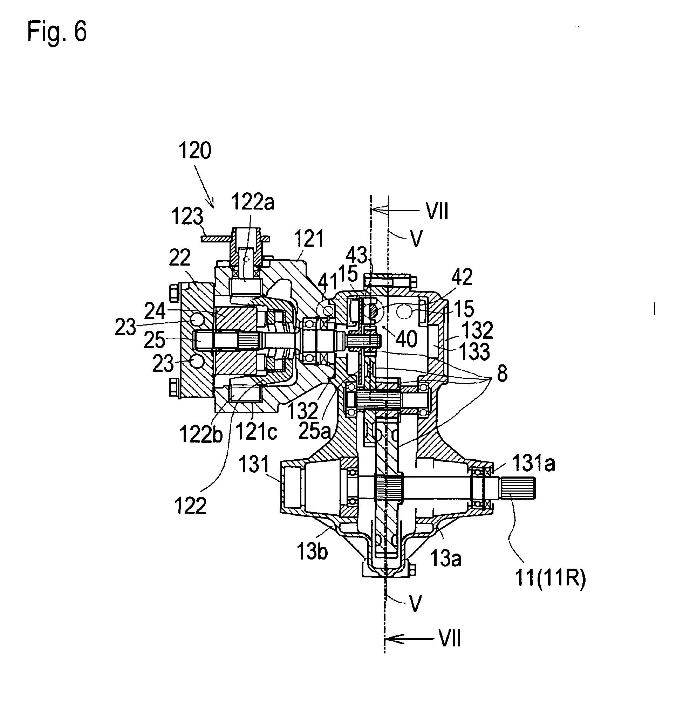

A first housing half 13a and a second housing half 13b are joined to each other at their vertical joint surfaces so as to constitute each of transaxle housings 12 of right and left transaxles 10R and 10L. In other words, each transaxle housing 12 is dividable at a vertical plane V (see Fig. 6) into first and second housing halves 13a and 13b. An output shaft 11 serving as either of right and left output shafts 11R and 11L projects outward from first housing half 13a. A motor for driving output shaft 11 (in the embodiment shown in Fig. 1, a fixed displacement hydraulic motor 20) is laterally cantilevered onto a right or left outside surface of second housing half 13b.

In other words, transaxle housing 12 of right transaxle 10R is provided at a right side thereof with first housing half 13 a from which output shaft 11R projects rightward, and is provided at a left side thereof with second housing half 13b whose left outside surface has hydraulic motor 20 mounted thereon. Transaxle housing 12 of left transaxle 10L is provided at a left side thereof with first housing half 13a from which output shaft 11R projects leftward, and is provided at a right side thereof with second housing half 13b whose right outside surface has hydraulic motor 20 mounted thereon. As a result, hydraulic motors 20 attached to transaxle housings 12 of respective right and left transaxles 10R and 10L are disposed laterally symmetrically with respect to the longitudinal centerline of lawn mower 100 at the lateral middle position between transaxle housings 12 of right and left transaxles 10R and 10L.

Each of first and second housing halves 13a and 13b is formed with upper and lower mount bosses 14 each of which is configured so as to be fastened to vehicle body frame 5 via a bolt fitted thereinto. Upper and lower bosses 14 of each of first and second housing halves 13a and 13b are vertically symmetric with respect to an axis of output shaft 11 serving as each of right and left output shafts 11R and 11L. Upper bosses 14 of respective first and second housing halves 13a and 13b joined to each other are laterally symmetric with respect to vertical plane V (see Fig. 6). Also, lower bosses 14 of respective first and second housing halves 13a and 13b joined to each other are laterally symmetric with respect to vertical plane V (see Fig. 6).

As detailed later, to providing first and second housing halves 13a and 13b, original housing halves 13 are formed by a common mold so as to have the same shape, and each original housing half 13 is formed by machining processes into either first or second housing half 13a or 13b. Transaxle housing 12 constituted by mutually joined first and second housing halves 13a and 13b serves as transaxle housing 12 of right transaxle 10R when it is disposed to have first housing half 13a at its right side and to have second housing half 13b at its left side, and transaxle housing 12 of right transaxle 10R can also serve as transaxle housing 12 of left transaxle 10L when it is vertically and laterally reversed so as to have first housing half 13a at its left side and so as to have second housing half 13b at its right side.

Further referring to Fig. 1, lawn mower 100 is provided with a pair of right and left variable displacement hydraulic pumps 30. Right hydraulic pump 30 is fluidly connected to hydraulic motor 20 of right transaxle 10R via a pair of pipes 6 so as to constitute a closed fluid circuit of a right hydrostatic transmission system including right hydraulic pump 30 and hydraulic motor 20 of right transaxle 10R. Left hydraulic pump 30 is fluidly connected to hydraulic motor 20 of left transaxle 10L via another pair of pipes 6 so as to constitute a closed fluid circuit of a left hydrostatic transmission system including left hydraulic pump 30 and hydraulic motor 20 of left transaxle 10L. Right and left hydraulic pumps 30 have respective vertical input shafts 33 that are drivingly connected to a vertical output shaft of an engine (not shown) via a belt transmission (not shown) or the like.

Each of right and left hydraulic pumps 30 is provided with a control arm 7 to be operated for controlling its delivery direction and quantity. Lawn mower 100 is provided with right and left operation devices, such as levers or pedals, that are operatively connected to respective control arms 7 of right and left hydraulic pumps 30. When the right and left operation devices are operated to move control arms 7 of right and left hydraulic pumps 30 to equal degrees in the same direction, lawn mower 100 travels forward or backward. When the right and left operation devices are operated to differentially move control arms 7 of right and left hydraulic pumps 30 in direction or in degree, lawn mower 100 turns right or left. If the right and left operation devices are operated to move control arms 7 to equal degrees in opposite directions, lawn mower 100 zero-turns.

Lawn mower 100 is provided with a reservoir tank 4 disposed between right and left hydraulic pumps 30 so as to store surplus fluid from right and left hydraulic pumps 30 and from hydraulic motors 20 of right and left transaxles 10R and 10L. Further, lawn mower 100 is provided with a fluid supply system (not shown) for supplementing fluid from reservoir tank 4 to the above-mentioned closed circuits of the right and left hydrostatic transmission systems.

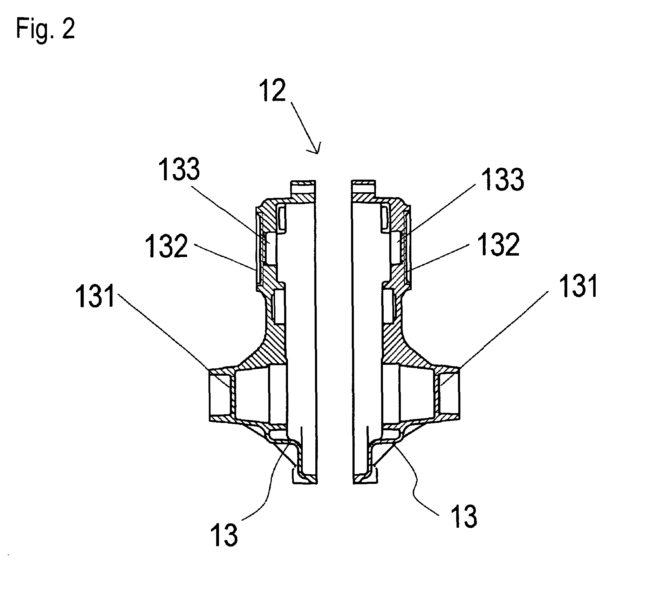

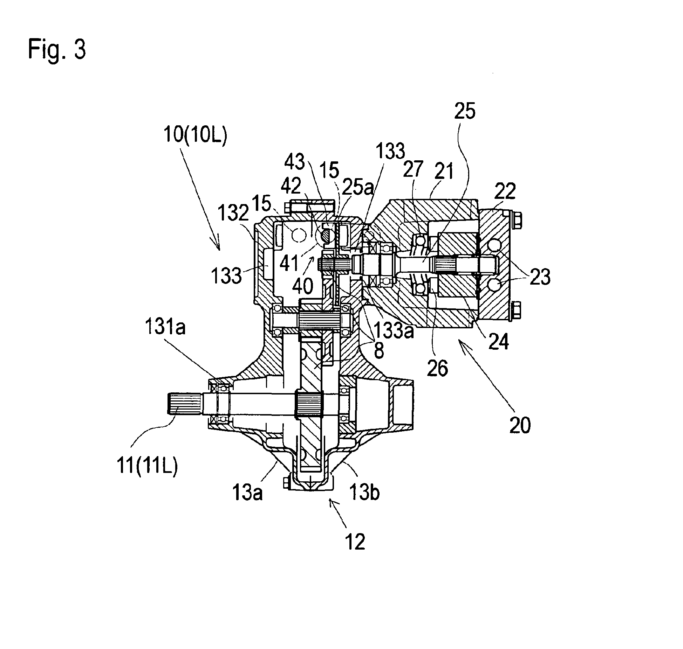

Transaxle housing 12 of each of right and left transaxles 10R and 10L will be described with reference to Fig. 2 and with reference to representative left transaxle 10L shown in Fig. 3. Original housing half 13 formed by the above-mentioned common mold looks like a shell when viewed in side (in the axial direction of output shaft 11R or 11L) so as to define a half of a chamber for incorporating a later-discussed reduction gear train 8, a later-discussed brake 40, and output shaft 10R or 10L. Original housing half 13 is formed with a wall 131 intercepting a passage for output shaft 11R or 11L so as to shut the chamber from the outside of transaxle housing 12. Further, original housing half 13 is formed with an outer recess 132 on an outside surface thereof to be offset forward or rearward from wall 131, and is formed with an inner recess 132 on an inner wall facing outer recess 131.

When original housing half 13 is going to serve as first housing half 13a, wall 131 is bored through with a hole 131 a for passing output shaft 11R or 11L by a machining process. When original housing half 13 is going to serve as second housing half 13b, outer recess 132 is expanded by a machining process so as to be formed to fit an end portion of a motor housing 21a (or 21b as shown in Fig. 6) of hydraulic motor 20, and inner recess 133 is expanded outward by a machining process so as to form a hole 133a that is extended outward from inner recess 133 and is connected to outer recess 132 so as to allow a motor shaft 25 of hydraulic motor 20 to pass therethrough when motor housing 21a (or 21b) of hydraulic motor 20 is attached to the outer surface of expanded outer recess 132.

Alternatively, original housing half 13 may be closed at an outer end of its rightward or leftward projecting portion, and this closed outer end may serve as wall 131 that can be bored with hole 131a from which output shaft 11 projects outward. Each of first and second housing halves 13a and 13b of transaxle housing 12 of later-discussed transaxle 10 (representative right transaxle 10R) shown in Fig. 6 is formed from original housing half 13 formed in this manner.

In this way, to constitute transaxle housing 12 of each of right and left transaxles 10R and 10L, two original housing halves 13 are prepared, one original housing half 13 is formed by the machining process into first housing half 13a for extending output shaft 11R or 11L outward therefrom, and the other original housing half 13 is formed by the machining process into second housing half 13b for mounting hydraulic motor 20 thereon.

Alternatively, transaxle housing 12 may be constituted by joining upper and lower housing halves at a horizontal plane on which an axis of the output shaft extends. Each of the upper and lower housing halves may be formed by machining process from an original housing half formed by a common mold. In this case, the original housing half is formed on a right portion thereof with a half of wall 131, a half of recess 132 and a half of recess 133, and is formed on a left portion thereof with a half of wall 131, a half of recess 132 and a half of recess 133, so that the right halves of wall 131 and recesses 132 and 133 and the left halves of wall 131 and recesses 132 and 133 are laterally symmetric. Depending on whether each original housing half is intended to serve as the upper housing half or the lower housing half, either of the right and left halves of walls 131 of the original housing half is selected to be formed with a half of hole 131 a for passing output shaft 11, and either of the right and left halves of recesses 132 and 133 is selected to be formed for mounting motor 20 and for passing motor shaft 25.

Each transaxle housing 12 constituted by joining the upper and lower housing halves at the horizontal plane can also serve as either transaxle housing 12 of right transaxle 10R provided at a right portion thereof with hole 131 a having right output shaft 11 R extended outward therefrom or transaxle housing 12 of left transaxle 10L provided at a left portion thereof with hole 131 a having left output shaft 11L extended outward therefrom, depending on whether it is vertically and laterally reversed or not.

Furthermore, as detailed later, each transaxle 10 has a common structure such that an output shaft 11, serving as either of output shafts 11R and 11L, and hydraulic motor 20 are extended laterally outward in opposite directions from its transaxle housing 12 incorporating brake 40 and reduction gear train 8. The only required thing for achieving the arrangement of laterally symmetric right and left transaxles 10R and 10L with respective hydraulic motors 20 between respective transaxle housings 12 as shown in Fig. 1 is that two transaxles 10 having the common structure are prepared, one transaxle 10 is disposed to extend output shaft 11 rightwardly outward from transaxle housing 12 and to extend hydraulic motor 20 leftwardly outward from transaxle housing 12 so as to serve as right transaxle 10R supporting right output shaft 11R, the other transaxle 10 is disposed to extend output shaft 11 leftwardly outward from transaxle housing 12 and to extend hydraulic motor 20 rightwardly outward from transaxle housing 12 so as to serve as left transaxle 10L supporting left output shaft 11L, and these right and left transaxles 10R and 10L are mounted to vehicle body frame 5.

The above-mentioned forming of original housing half 13 into either of first and second housing halves 13a and 13b stands on the premise that hydraulic motors 20 should be arranged between (i.e., on the lateral proximal sides of) transaxle housings 12 of respective right and left transaxles 10R and 10L. Alternatively, if hydraulic motors 20 are desired to be mounted on the lateral distal sides oftransaxle housings 12 of respective right and left transaxles 10R and 10L as well as output shafts 11R and 11L projecting in the lateral distal directions from respective transaxle housings 12, one of two original housing halves 13 prepared for constituting each transaxle housing 12 may have its wall 131 and recesses 132 and 133 formed by the machining processes so as to enable extending both output shaft 11 and hydraulic motor 20 outward therefrom, and the other of the prepared two original housing halves 13 may have no machining process for deforming its wall 131 and recesses 132 and 133.

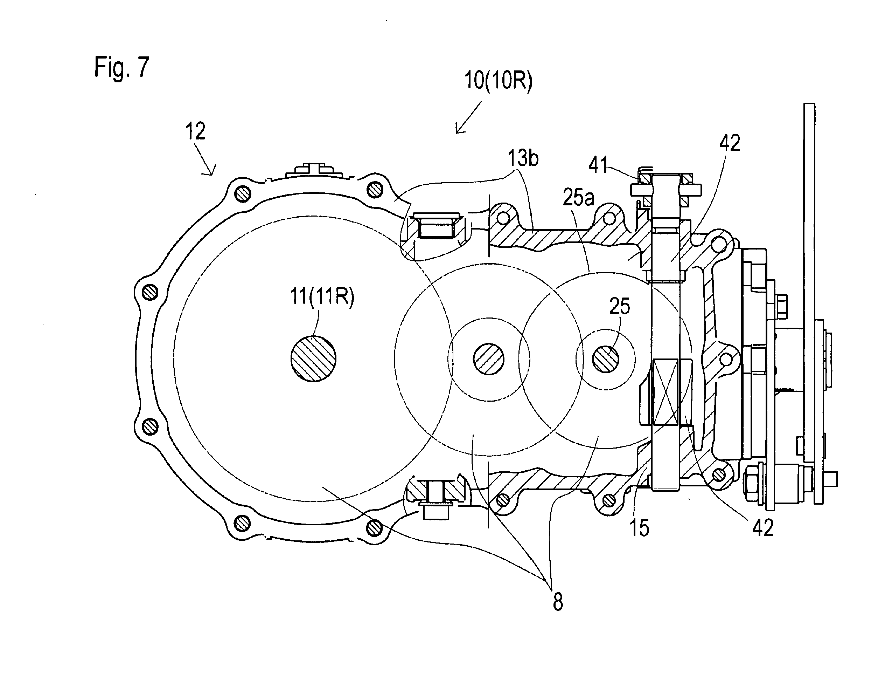

An interior structure of each of right and left transaxles 10R and 10L will be described with reference to representative left transaxle 10L shown in Fig. 3, and with reference to representative right transaxle 10R shown in Figs. 6 and 7. Hydraulic motor 20 is mounted onto each transaxle housing 12, so that motor shaft 25 extends laterally horizontally (i.e., parallel to output shaft 11) so as to have its proximal end (i.e., a right end of motor shaft 25 in right transaxle 10R, or a left end of motor shaft 25 in left transaxle 10L) in transaxle housing 12, and so as to have its distal end (i.e., a left end of motor shaft 25 in right transaxle 10R, or a right end of motor shaft 25 in left transaxle 10L) outside transaxle housing 12. Each transaxle housing 12 supports output shaft 11 (i.e., right output shaft 11R or left output shaft 11L) and incorporates brake 40 and reduction gear train 8. Brake 40 is provided around the proximal end of motor shaft 25 in the half chamber of second housing half 13b. Output shaft 11 (i.e., output shaft 11R or 11L) is supported by housing halves 13a and 13b via respective bearings. Gears constituting reduction gear train 8 are assembled in transaxle housing 12 so as to be interposed between the proximal end of motor shaft 25 and output shaft 11. On the assumption that hydraulic motor 20 is mounted on second housing half 13b, first and second housing halves 13a and 13b are joined and fastened to each other to constitute transaxle housing 12 incorporating brake 40 and reduction gear train 8, thereby completing transaxle 10 that may serve as either right transaxle 10R or left transaxle 10L. This transaxle 10 serves as left transaxle 10L as shown in Fig. 3 when first housing half 13a is disposed at the left side thereof, and this transaxle can also serve as right transaxle 10R as shown in Fig. 6 when first housing half 13a is disposed at the right side thereof.

Brake 40 includes a brake arm 41, a brake camshaft 42, a brake shoe 43, and a brake rotor 25a. Brake rotor 25a is fixed on the proximal end portion of motor shaft 25. Brake shoe 43 is disposed in transaxle housing 12 so as to face brake camshaft 42, so that brake shoe 43 is moved by the rotation of brake camshaft 42 so as to be shiftable between a braking position where it is pressed against brake rotor 25a to brake motor shaft 24 and an unbraking position where it is separated from brake rotor 25a to allow rotation of motor shaft 25. Brake arm 41 is fixed on an end portion of brake camshaft 42 projecting outward from transaxle housing 12 and is operatively connected to a brake operation device provided on the vehicle (lawn mower 100).

In this regard, original housing half 13 is formed through upper and lower walls thereof with top and bottom bosses 15, as shown in Fig. 7. Both top and bottom bosses 15 are opened outward, i.e., top boss 15 is opened upwardly outward, and bottom boss 15 is opened downwardly outward. Vertical brake camshaft 42 is rotatably fitted through top and bottom bosses 15 of housing half 13, and one end portion of brake camshaft 42 projects outward from one of bosses 15 so as to be fixedly provided thereon with brake arm 41. In this embodiment, brake arm 41 is fixed on a top end portion of brake camshaft 42 projecting upward from top boss 15 of housing half 13. Top and bottom bosses 15 are symmetrical with respect to a horizontal plane intersecting a horizontal axis of output shaft 11R or 11L. Therefore, either of the two bosses 15 can be used to have the end portion of brake camshaft 42 projecting outward from its open end to be provided thereon with brake arm 41. In this way, each boss 15 can becomes either the top boss or the bottom boss depending on whether housing half 13a or 13b having this boss 15 is vertically and laterally reversed or not.

In the embodiment shown in Fig. 1, each of right and left transaxles 10R and 10L has brake arm 41 on its second housing half 13b on which hydraulic motor 20 is cantilevered. In other words, regardless of whether second housing half 13b is disposed at the right side of transaxle housing 12 or at the left side of housing 12, second housing half 13b can be provided with top boss 15 from which the top end of brake camshaft 42 projects outward to have brake arm 41 thereon.

Alternatively, top and bottom bosses 15 of first housing half 13a may be used for supporting brake camshaft 42, and brake arm 41 may be provided on a bottom end portion of brake camshaft 42 projecting downward from bottom boss 15 of housing half 13.

In this way, due to the common mold for forming original housing half 13 that can be further formed into either of first and second housing halves 13a and 13b of each of right and left transaxles 10R and 10L, standardization of transaxle housings 12 of right and left transaxles 10R and 10L for the zero-turn vehicle such as lawn mower 100 is promoted.

Referring to Figs. 1, 3 and 5, fixed displacement hydraulic motor 20 includes motor housing 21 having one end fixed to above-mentioned expanded outer recess 132 of second housing half 13b. A port block 22 is fixed to another opposite end of motor housing 21 so as to cover an opening on this end of motor housing 21. A pair of fluid ducts 23 are formed in port block 22 so as to be connected to respective pipes 6. Port block 22 rotatably supports the distal end of motor shaft 25. A cylinder block 24 is fitted on motor shaft 25 so as to be rotatable integrally with motor shaft 25, is fitted to a surface of port block 22 so as to be rotatable relative to port block 22, and is disposed in motor housing 21. Pistons 26 are fitted in cylinder block 22 , and abut against a fixed swash plate 26 supported in motor housing 21.

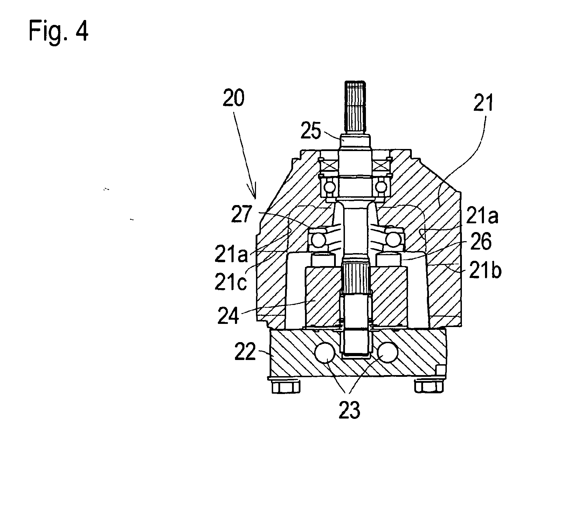

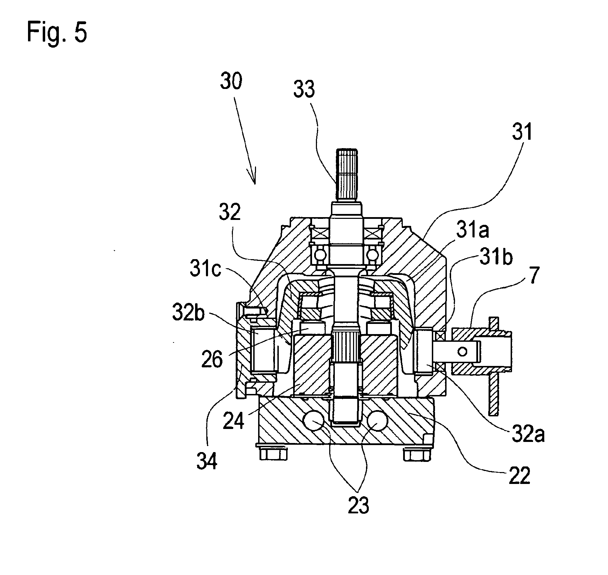

Fixed displacement hydraulic motor 20 shown in Fig. 4 is a prototypical hydraulic motor that is applicable to serve as either variable displacement hydraulic pump 30 shown in Fig. 5 or a variable displacement hydraulic motor 120 shown in Fig. 6. More specifically, referring to Figs. 4 and 5, motor housing 21 is formed by a mold so as to support fixed swash plate 26, and motor housing 21 serves as a prototypical housing for forming a pump housing 31 of hydraulic pump 30. That is, prototypical motor housing 21 can be machined to cut off a portion 21 a so as to form a chamber 31a for accommodating a trunnion type movable swash plate 32, and can be machined to cut off portions 21b and 21c so as to form opposite through holes 31b and 31c for pivotally supporting respective trunnions 32a and 32b of movable swash plate 32. Referring to Fig. 4, trunnion 32a fitted in hole 31b projects outward from pump housing 31 so as to be fixedly provided thereon with control arm 7. Hole 31 c is diametrically larger than hole 31b, a cap 34 is fixedly fitted into hole 31c, and trunnion 32b of movable swash plate 32 is fitted into cap 34 fitted in hole 31c, so that trunnion 32b is rotatable relative to cap 34 and pump housing 31.

Movable swash plate 32 supported by pump housing 31 is rotatable in opposite directions from its neutral position so as to enable hydraulic pump 30 to deliver fluid in either of opposite directions, thereby enabling corresponding hydraulic motor 20 to rotate motor shaft 25 in either of opposite directions, and thereby enabling corresponding right or left drive wheel 2R or 2L to rotate forward or backward.

Referring to Fig. 6, each of right and left transaxles 10R and 10L is provided with alternative variable displacement hydraulic motor 120. Motor housing 121 of hydraulic motor 120 is formed from prototypical motor housing 21 by cutting off portions 21a and 21b of motor housing 21, so as to form a chamber 121a for accommodating a trunnion type movable swash plate 122, and so as to form a through hole 121b through which a trunnion 122a of movable swash plate 122 is passed to project outward from motor housing 121 so as to be fixedly provided thereon with a control arm 123. Movable swash plate 122 may be identical or similar to movable swash plate 32, chamber 121a and through hole 121b of motor housing 121 corresponds to chamber 31a and through hole 31b ofmotor housing 31. Motor housing 121 is not formed with a diametrically large hole for retaining cap 34 for supporting another trunnion 122b of movable swash plate 122, however, motor housing 121 is formed with a recess 121c opposite to through hole 121b, and trunnion 122b is relatively rotatably fitted into recess 121c without cap 34. However, motor housing 121 of hydraulic motor 120 may be formed with an alternative through hole corresponding to through hole 31c so as to have cap 34 for supporting trunnion 122b, and pump housing 31 of hydraulic pump 30 may be formed with an alternative recess corresponding to recess 121c so as to support trunnion 32b without cap 34.

Movable swash plate 122 is shiftable between a high speed position and a low speed position. Control arm 123 or movable swash plate 122 is provided with a detent mechanism for retaining movable swash plate 122 at either the high speed position or the low speed position. Both the high and low speed positions of movable swash plate 122 are located in one direction from a phantom essential neutral position of movable swash plate 122, so that the delivery direction of hydraulic motor 120 is not changed depending on whether movable swash plate 122 is set at the high speed position or the low speed position. The tilt angle of movable swash plate 122 from its phantom essential neutral position, when movable swash plate 122 is disposed at the high speed position, is smaller than that of movable swash plate 122 when movable swash plate 122 is disposed at the low speed position, so that the displacement of hydraulic motor 120 when movable swash plate 122 is set at the high speed position is less than the displacement of hydraulic motor 120 when movable swash plate 122 is set at the low speed position, thereby enabling either high or low rotary speed of motor shaft 25 on the assumption that the delivery direction and degree of corresponding hydraulic pump 30 are constant.

Reference numerals designating respective parts of hydraulic motor 20 shown in Figs. 3 and 4 are adapted to designate corresponding parts of hydraulic pump 30 shown in Fig. 5 and motor 120 shown in Fig. 6, because these parts have the same structures or functions as those of hydraulic motor 20. More specifically, port block 22 having fluid ducts 23, cylinder block 24, and pistons 26 are provided in hydraulic motor 20, and they can serve as corresponding parts of each of hydraulic pump 30 and hydraulic motor 120. Further, motor shaft 25 of hydraulic motor 20 can serve as input shaft 33 of hydraulic pump 30 or motor shaft 25 of hydraulic motor 120.

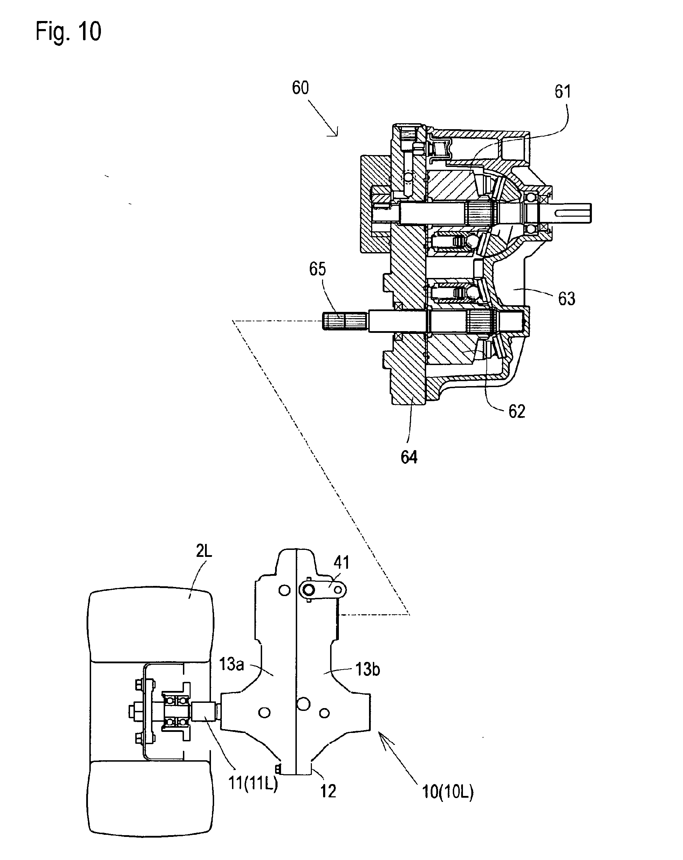

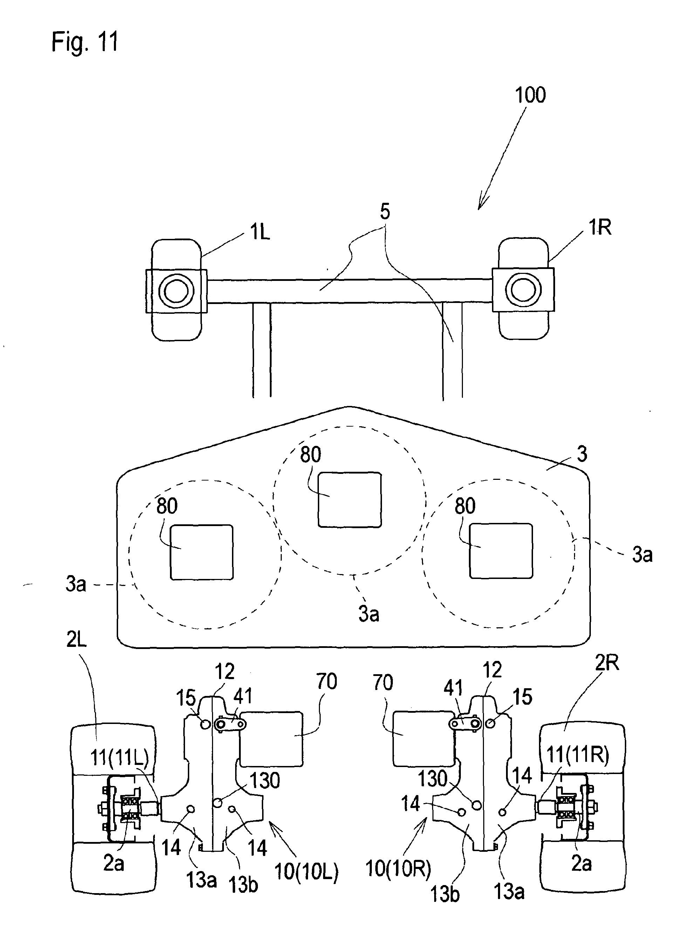

Further, reference numerals designating respective parts of representative transaxle 10L shown in Fig. 3 are adapted to designate corresponding parts of representative transaxle 10R shown in Figs. 5 and 6, because these parts have the same structures or functions as those of transaxle 10L shown in Fig. 3. The same thing is true regarding reference numerals designating parts of later-discussed alternative transaxles 10 shown in Figs. 10 and 11.

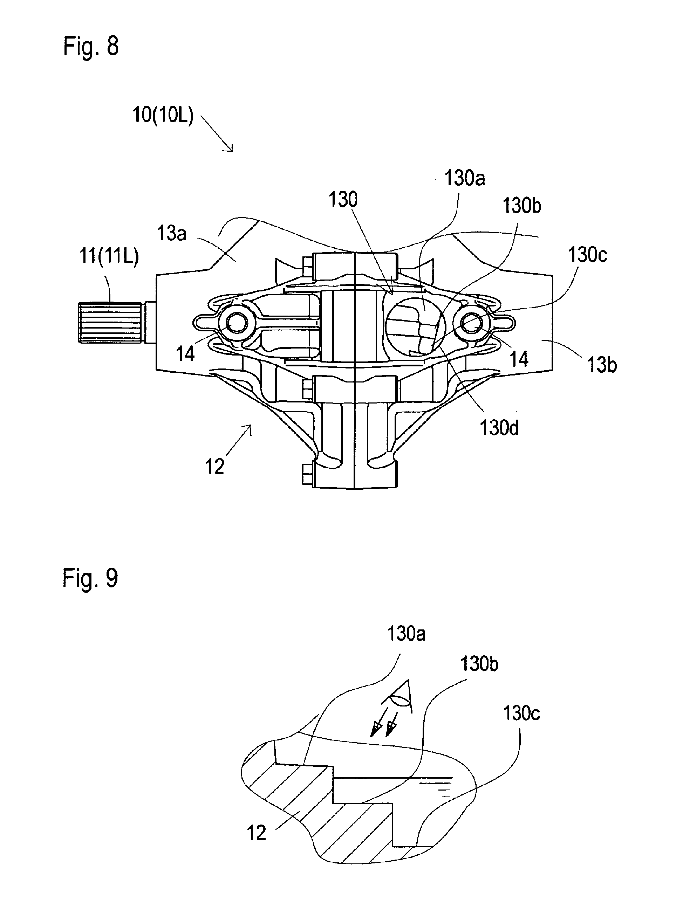

Referring to Figs. 1, 8 and 9, a fluid gauge 130 is provided on an upper surface of each transaxle housing 12. Fluid gauge 130 includes steps that are formed on one of housing halves 13a and 13b so as to have different depths. In this embodiment, the steps are three steps, i.e., a shallowest step 130a, a middle step 130b, and a deepest step 130c. Fluid gauge 130 further includes a transparent plate 130d provided on transaxle housing 12 above steps 130a, 130b and 130c, so that steps 130a, 130b and 130c are visible through transparent plate 130d.

Fluid gauge 130 is provided for judging whether the quantity of fluid filled into transaxle housing 12 reaches a satisfactory value or not. The fluid is lube for lubricating gears of reduction gear train 8 and the like. The fluid may be used for operating hydraulic motor 20. The different depths of steps 130a, 130b and 130c are provided in consideration that the volume of fluid changes according to change of its temperature. For example, when fluid to be filled into transaxle housing 12 has a high temperature, such as 40 degrees C, a quantity of fluid when soaking shallowest step 130a is decided as a proper quantity in consideration of expansion of the fluid according to the high temperature. When fluid to be filled into transaxle housing 12 has a low temperature, such as 0 degree C, a quantity of fluid when soaking deepest step 130a is decided as a proper quantity in consideration of contraction of the fluid according to the low temperature. Middle step 130b corresponds to fluid having a normal temperature, such as 20 degrees C.

Steps 130a, 130b and 130c serving as fluid gauge 130 may be initially formed on original housing half 13 formed by the above-mentioned common mold, or original housing half 13 may be further formed with steps 130a, 130b and 103c by additional machining process. If steps 130a, 130b and 130c are initially formed on each original housing half 13, one of two housing halves 13 serving as first and second housing halves 13a and 13b of transaxle housing 12 of each of right and left transaxles 10R and 10L comes to have steps 130a, 130b and 130c on its upper surface. Therefore, these steps 130a, 130b and 130c on the upper surface of one housing half 13a or 13b can be used as fluid gauge 130.

Transaxle 10 provided with a hydrostatic transmission (hereinafter, HST) 60 including a hydraulic pump 61 and a hydraulic motor 62 according to an alternative embodiment will be described with reference to representative left transaxle 10L shown in Fig. 10. HST 60 includes an HST housing 63 incorporating hydraulic pump 61 and motor 62, and includes a port block 64 formed therein with fluid ducts for fluidly connecting hydraulic pump 61 and motor 62 to each other. Port block 64 is fixed to HST housing 63 so as to cover HST housing 63 and so as to fit cylinder blocks of pump 61 and motor 62 in HST housing 63.

Port block 64 is fixed onto a right or left outside surface of transaxle housing 12, i.e., of second housing half 13b, so that an end portion of a motor shaft 65 of hydraulic motor 62 projecting outward from port block 64 is disposed in transaxle housing 12 so as to be drivingly connected to reduction gear train 8 and to be provided with brake 40. Alternatively, the end portion of motor shaft 65 projecting outward from port block 64 may be disposed outside of transaxle housing 12, and may be drivingly connected to reduction gear train 8 in transaxle housing 12 via a belt transmission or the like if such an arrangement is desired in consideration of a lateral width of the vehicle or for another reason.

Referring to Fig. 11, alternative lawn mower 100 is equipped with right and left transaxles 10R and 10L, each of which includes an electric motor 70 mounted onto an outer surface of the lateral proximal side of second housing half 13b of transaxle housing 12. Electric motors 70 of respective right and left transaxles 10R and 10L are identical to each other in structure, shape and capacity, thereby standardizing transaxle 10 that can serve as either right transaxle 10R or left transaxle 10L. A motor shaft (an output shaft) of electric motor 70 mounted on transaxle housing 12 is extended into transaxle housing 12 so as to be provided with brake 40, and so as to be drivingly connected to each output shaft 11R or 11L via reduction gear train 8, similar to motor shaft 25 of hydraulic motor 20 or 120 or output shaft 65 of HST 60.

Lawn mower 100 shown in Fig. 11 is equipped with electric motors 80 for driving respective blades 3a in mower deck 3. All electric motors 80 may be identical to one another in structure, shape and capacity. Alternatively, lawn mower 100 may be equipped with a single electric motor for driving blades 3a, and blades 3a may mechanically interlock with one another so that an output of the single electric motor can be transmitted to all blades 3a.

## Claims

1. A transaxle (10) comprising:
an output shaft (11) to be drivingly connected to one of right and left drive wheel (2R, 2L) of a vehicle (100);
a transaxle housing (12) supporting the output shaft (11) laterally;
a drive train (8) disposed in the transaxle housing (12) so as to drive the output shaft (11); and
a motor (20, 120, 62, 70) externally mounted onto the transaxle housing (12),
wherein a motor shaft (25, 65) of the motor (20, 120, 62, 70) is disposed at one end thereof in the transaxle housing (12) so as to be drivingly connected to the output shaft (11) via the drive train (8), **characterized in that**
a pair of first and second housing halves (13a, 13b) are joined to each other so as to constitute the transaxle housing (12),
wherein each of the first and second housing halves (13a, 13b) is formed from an original housing half (13) formed by a mold, so that the original housing half (13) can be further formed into either the first or second housing half (13a, 13b) regardless of whether or not the original housing half (13) is vertically and laterally reversed,
wherein one of the first and second housing halves (13a, 13b) has the output shaft (11) projecting outward therefrom,
wherein one of the first and second housing halves (13a, 13b) has the motor (20, 120, 62, 70) mounted thereon, and
wherein the transaxle (10) can serve as either a right transaxle (10R) supporting a right output shaft (11R) to be drivingly connected to the right drive wheel (2R) of the vehicle (100) or a left transaxle (10L) supporting a left output shaft (11L) to be drivingly connected to the left drive wheel (2L) of the vehicle (100) depending on whether the transaxle (10) is vertically and laterally reversed or not.

2. The transaxle according to claim 1, wherein the first and second housing halves (13a, 13b) are joined to each other at a plane (V), which is perpendicular to the output shaft (11), so as to constitute the transaxle housing (12).

3. The transaxle according to claim 1, wherein the first and second housing halves are joined to each other at a plane, on which an axis of the output shaft (11) extends, so as to constitute the transaxle housing (12).

4. The transaxle according to claim 1 wherein the motor is a hydraulic motor (20) provided with a housing (21), wherein the hydraulic motor (20) is configured to be fluidly connected to a hydraulic pump (30) provided on the vehicle (100) via a pipe (6), and wherein the housing (21) of the hydraulic motor (20) is a prototypic housing that can be further formed to a housing (31) of the hydraulic pump (30).

5. The transaxle according to claim 1, wherein the original housing half (13) that can be further formed into either the first or second housing half (13a, 13b) is formed with vertically symmetric top and bottom bosses (15) for passing a brake camshaft (42) therethrough.

## Patentansprüche

1. Transaxle (10), das umfasst:
eine Ausgangswelle (11), die mit dem rechten oder mit dem linken Antriebsrad (2R, 2L) eines Fahrzeugs (100) antreibend verbunden werden kann;
ein Transaxlegehäuse (12), das die Ausgangswelle (11) seitlich stützt;
einen Antriebsstrang (8), der in dem Transaxlegehäuse (12) angeordnet ist, um die Ausgangswelle (11) anzutreiben; und
einen Motor (20, 120, 62, 70), der außen an dem Transaxlegehäuse (12) angebracht ist,
wobei eine Motorwelle (25, 65) des Motors (20, 120, 62, 70) an einem Ende davon in der Weise in dem Transaxlegehäuse (12) angeordnet ist, dass sie über den Antriebsstrang (8) antreibend mit der Ausgangswelle (11) verbunden ist, **dadurch gekennzeichnet, dass** ein Paar einer ersten und einer zweiten Gehäusehälfte (13a, 13b) in der Weise miteinander verbunden sind, dass sie das Transaxlegehäuse (12) bilden,
wobei sowohl die erste als auch die zweite Gehäusehälfte (13a, 13b) aus einer ursprünglichen Gehäusehälfte (13) geformt sind, die durch eine solche Gießform geformt worden ist, dass die ursprüngliche Gehäusehälfte (13) unabhängig davon, ob die ursprüngliche Gehäusehälfte (13) vertikal und seitlich umgedreht ist, entweder zu der ersten oder zu der zweiten Gehäusehälfte (13a, 13b) weiter geformt werden kann,
wobei an der ersten oder an der zweiten Gehäusehälfte (13a, 13b) die Ausgangswelle (11) nach außen vorsteht,
wobei an der ersten oder an der zweiten Gehäusehälfte (13a, 13b) der Motor (20, 120, 62, 70) angebracht ist,
und
wobei das Transaxle (10) je nachdem, ob das Transaxle (10) vertikal und seitlich umgedreht ist, entweder als ein rechtes Transaxle (10R), das eine rechte Ausgangswelle (11R) stützt, die mit dem rechten Antriebsrad (2R) des Fahrzeugs (100) antreibend verbunden werden kann, oder als ein linkes Transaxle (10L), das eine linke Ausgangswelle (11L) stützt, die mit dem linken Antriebsrad (2L) des Fahrzeugs (100) antreibend verbunden werden kann, dienen kann.

2. Transaxle nach Anspruch 1, bei dem die erste und die zweite Gehäusehälfte (13a, 13b) in einer Ebene (V), die senkrecht zu der Ausgangswelle (11) ist, miteinander verbunden sind, um das Transaxlegehäuse (12) zu bilden.

3. Transaxle nach Anspruch 1, bei dem die erste und die zweite Gehäusehälfte (13a, 13b) in einer Ebene, in der eine Achse der Ausgangswelle (11) verläuft, miteinander verbunden sind, um das Transaxlegehäuse (12) zu bilden.

4. Transaxle nach Anspruch 1, bei dem der Motor ein Hydraulikmotor (20) ist, der mit einem Gehäuse (21) versehen ist, wobei der Hydraulikmotor (20) dafür konfiguriert ist, über ein Rohr (6) fluidtechnisch mit einer an dem Fahrzeug (100) bereitgestellten Hydraulikpumpe (30) verbunden zu werden, und wobei das Gehäuse (21) des Hydraulikmotors (20) ein Prototypgehäuse ist, das zu einem Gehäuse (31) der Hydraulikpumpe (30) weiter geformt werden kann.

5. Transaxle nach Anspruch 1, bei dem die ursprüngliche Gehäusehälfte (13), die entweder zu der ersten oder zu der zweiten Gehäusehälfte (13a, 13b) weiter geformt werden kann, mit einem oberen und mit einem unteren Vorsprung (15), die vertikal symmetrisch sind, zum Durchleiten einer Bremsnockenwelle (42) geformt ist.

## Revendications

1. Boîte-pont (10) comprenant :
un arbre de sortie (11) pour être connecté par entraînement à une de roues motrices droite et gauche (2R, 2L) d'un véhicule (100) ;
un logement de boîte-pont (12) supportant l'arbre de sortie (11) latéralement ;
une transmission (8) disposée dans le logement de boîte-pont (12) de manière à entraîner l'arbre de sortie (11) ; et
un moteur (20, 120, 62, 70) monté de manière externe sur le logement de boîte-pont (12),
dans laquelle un arbre moteur (25, 65) du moteur (20, 120, 62, 70) est disposé à une extrémité de celui-ci dans le logement de boîte-pont (12) de manière à être connecté par entraînement à l'arbre de sortie (11) par le biais de la transmission (8), **caractérisée en ce que** une paire de première et seconde moitiés de logement (13a, 13b) sont reliées l'une à l'autre de manière à constituer le logement de boîte-pont (12),
dans laquelle chacune des première et seconde moitiés de logement (13a, 13b) est formée d'une moitié de logement originale (13) formée par un moule de sorte que la moitié de logement originale (13) peut être en outre formée en première ou seconde moitié de logement (13a, 13b) sans se soucier du fait que la moitié de logement originale (13) soit inversée verticalement et latéralement ou non,
dans laquelle une des première et seconde moitiés de logement (13a, 13b) a l'arbre de sortie (11) faisant saillie vers l'extérieur depuis elle,
dans laquelle une des première et seconde moitiés de logement (13a, 13b) a le moteur (20, 120, 62, 70) monté sur elle, et
dans laquelle la boîte-pont (10) peut servir de boîte-pont droite (10R) supportant un arbre de sortie droit (11R) devant être connecté par entraînement à la roue motrice droite (2R) du véhicule (100) ou de boîte-pont gauche (10L) supportant un arbre de sortie gauche (11L) pour être connecté par entraînement à la roue motrice gauche (2L) du véhicule (100) en fonction du fait que la boîte-pont (10) soit inversée verticalement et latéralement ou non.

2. Boîte-pont selon la revendication 1, dans laquelle les première et seconde moitiés de logement (13a, 13b) sont reliées l'une à l'autre au niveau d'un plan (V) qui est perpendiculaire à l'arbre de sortie (11) de manière à constituer le logement de boîte-pont (12).

3. Boîte-pont selon la revendication 1, dans laquelle les première et seconde moitiés de logement sont reliées l'une à l'autre au niveau d'un plan sur lequel un axe de l'arbre de sortie (11) s'étend de manière à constituer le logement de boîte-pont (12).

4. Boîte-pont selon la revendication 1, dans laquelle le moteur est un moteur hydraulique (20) pourvu d'un logement (21), dans laquelle le moteur hydraulique (20) est configuré pour être connecté par voie fluidique à une pompe hydraulique (30) prévue sur le véhicule (100) par le biais d'un tuyau (6), et dans laquelle le logement (21) du moteur hydraulique (20) est un logement prototype qui peut être en outre formé sur un logement (31) de la pompe hydraulique (30).

5. Boîte-pont selon la revendication 1, dans laquelle la moitié de logement originale (13) qui peut être en outre formée en la première ou seconde moitié de logement (13a, 13b) est formée avec des protubérances supérieure et inférieure symétriques verticalement (15) pour faire passer un arbre à cames de frein (42) à travers elles.
